# EUROPÄISCHE PATENTANMELDUNG

(11) **EP 1 443 099 A2**
(43) Veröffentlichungstag der Anmeldung: **04.08.2004**
(21) Anmeldenummer: 04405027.6
(22) Anmeldetag: 13.01.2004
(51) Int. Cl.: C11D 17/04, A47L 13/16, C11D 3/12, C11D 3/48

(54) **Reinigungstuch mit selbstreinigender Wirkung und dessen Anwendung**

(30) Priorität: 17.01.2003 CH 612003
(71) Anmelder: VIP Domotec S.A.R.L., 3364 Leudelange (LU)
(72) Erfinder: Hahn, Franz-Josef, 56235 Ransbach-Baumbach (DE)
(74) Vertreter: Gaggini, Carlo, Dipl.Ing.

(57) **Zusammenfassung**

Die vorliegende Erfindung betrifft ein Reinigungstuch mit selbstreinigender Wirkung. Diese Wirkung beruht darauf, dass das Reinigungstuch antibakteriell wirkende keramische Fasern enthält, die aus lamellaren synthetischen Mikrofasern bestehen, in welche während des Herstellprozesses Zeolithe eingebracht worden sind, die ihrerseits Ionen von starker antibakterieller Wirksamkeit enthalten.

Die Ionen sind vorzugsweise metallische Silber- oder Kupferionen.

Das erfindungsgemässe Reinigungstuch wird vorzugsweise zum Reinigen von Glasscheiben, Spiegeln, Stahlflächen und generell von horizontalen Flächen verwendet.

Das erfindungsgemässe Reinigungstuch eignet sich auch zur Verwendung im Kontakt mit Lebensmittel-Substanzen.

## Beschreibung

Die vorliegende Erfindung betrifft ein Reinigungstuch mit selbstreinigender Wirkung.

Die Verwendung von Reinigungstüchern aus lamellaren synthetischen Mikrofasern ist in der Praxis bekannt.. Mit solchen Reinigungstüchern lassen sich sehr hohe Reinigungseffekte erreichen.

Mit der vorliegenden Erfindung sollen die starke Reinigungswirkung der Reinigungstücher aus synthetischen Mikrofasern mit den Selbstreinigungs-Eigenschaften kombiniert werden, welche die im Material der Fasern eingebauten sogenannten Zeolithe aufweisen: die Zeolithe enthaltenden Mikrofasern werden im Folgenden antibakterielle Keramikfasern genannt, damit ihre besonderen Eigenschaften hervorgehoben werden.

Zeolithe sind mikrokristalline Festkörperstrukturen, die im Wesentlichen aus Silizium, Aluminium und Sauerstoff bestehen, und die in ihrer Struktur dank ihrer Porosität Kationen, Wasser und andere Moleküle aufnehmen können.

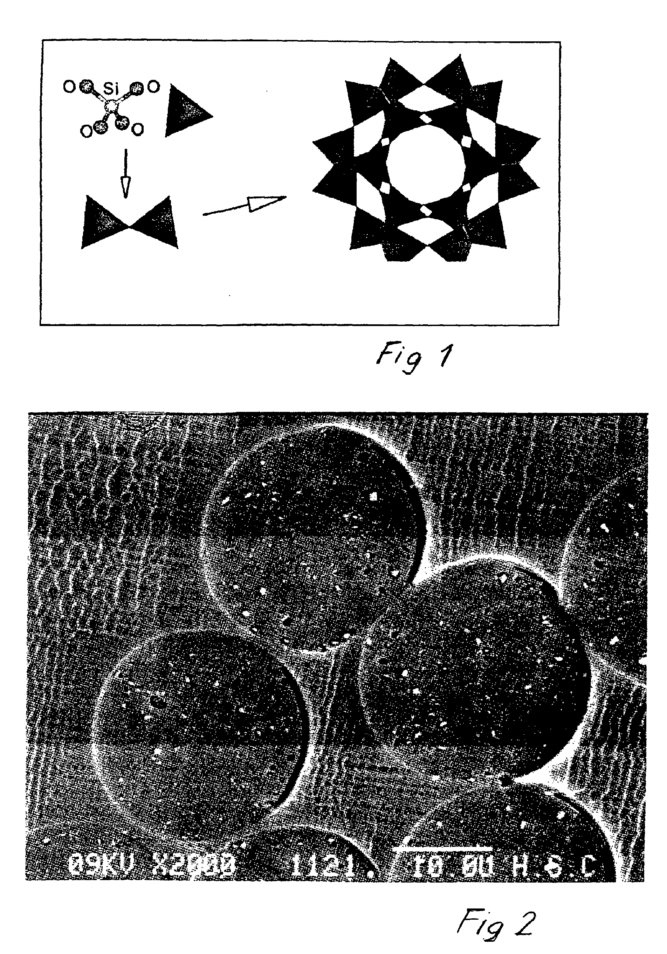

In der Fig. 1 ist eine Darstellungsart für Zeolithe gezeigt. Ein Zeolith besteht aus Tetraedern, die von einem Siliziumatom im Zentrum und je einem Sauerstoffatom in den Ecken gebildet werden. Diese Tetraeder können an ihren Ecken untereinander verbunden sein, was eine unendliche Vielfalt von Strukturen ergibt. Solche Strukturen können Käfige, Hohlräume und Kanäle enthalten, durch welche Moleküle mit einem Durchmesser von 3 bis 10 Å ins Innere der Struktur aufgenommen werden können.

Gegenwärtig sind etwa 130 in der Natur vorkommende Strukturtypen bekannt.

Die in der vorliegenden Erfindung verwendeten Zeolithe haben die Eigenschaft, dass sie Ionen mit hoher antibakterieller Wirksamkeit in sich aufnehmen können, wie beispielsweise Silber- oder Kupfer-Metallionen. So beladene Zeolithe neigen dazu, Silberionen abzugeben, während Wasser in die poröse Struktur der Zeolithe eindringt.

Die Versuche haben gezeigt, dass die Anzahl der austretenden Ionen einige Teile pro Milliarde (ppb, parts per billion) beträgt. Diese Ionen üben eine antibakterielle Wirkung aus: diese Wirkung beruht darauf, dass die metallischen Ionen aktiven Sauerstoff hervorrufen. Die Versuche belegen, dass eine solche Umgebung, wie die soeben beschriebene, besonders stark gegen zahlreiche Bakterien wirkt, einschliesslich Salmonellen.

Der oben beschriebene Zeolith kann während des Spinnvorgangs in das Filament eingebracht werden, so dass er beim Weben integraler Bestandteil des textilen Flächengebildes wird.

Diese positiven Eigenschaften haben Anwendung gefunden in der Herstellung von Operationssaal-Kleidungsstücken, für die Herstellung von Handschuhen aus mit den genannten Mikrostrukturen angereichertem Polyester, zur Behandlung und Konservierung von Lebensmitteln sowie in vielen weiteren Anwendungen.

Die Verwendung solcher Filamente zur Herstellung von Reinigungstüchern, die mit blossem Wasser reinigen, ist Gegenstand der vorliegenden Patentanmeldung.

### Stand der Technik

Die gegenwärtig verwendeten Lösungen für Reinigungstücher für die Nassreinigung basieren in den meisten Fällen auf der abrasiven, scheuernden Wirkung des Reinigungstuches im Zusammenwirken mit einem in der Regel flüssigen Reinigungsmittel.

Eine von verschiedenen Herstellern aufgegriffene Lösung zum Reinigen mit blossem Wasser basiert auf Geweben, die aus Polyester und Polyamid hergestellt sind (beispielsweise liess die schwedische Firma "Trasan" eine nichtscheuernde Kombination in einem Gewebe mit 70% Polyester und 30% Polyamid patentieren, im italienischen "Eternal" werden 80% Polyester und 20% Polyamid verwendet).

In keinem der Fälle gemäss dem gegenwärtigen Stand der Technik erzeugen die Reinigungstücher von selbst ein steriles Umfeld, oder anders ausgedrückt, erzeugen sie kein für das Überleben und die Vermehrung von Bakterien ungeeignetes Umfeld.

Sodann entwickelt sich, wenn das Reinigungstuch nach Gebrauch ohne Auswaschen beiseite gelegt wird, innert relativ kurzer Zeit ein übler Geruch, was darauf schliessen lässt, dass die Bakterien eine für ihre Vermehrung günstige Umgebung gefunden haben.

Werden die Gewebe zur Ausbildung eines antibakteriellen Umfeldes chemisch behandelt, so steigen auch die Risiken beim Benutzen des Tuches, nämlich insbesondere:
- Gefahr eines Kontaktes chemischer Zusätze auf der Haut;
- Schwer abschätzbare Wirksamkeit des textilen Produktes;
- Rascher Verlust der antibakteriellen Wirksamkeit.

### Funktionsprinzip des Reinigungstuches gemäss der vorliegenden Erfindung

Das Überwinden der oben angegebenen Begrenzungen wird möglich dank der Verwendung von Filamenten, in denen die geeigneten keramischen Zusätze eingebaut sind. Beispielsweise werden bei der Herstellung der Polymere wie Polyester dem aufgeschmolzenen Polyester während der Herstellung des Filaments die Zeolithe beigefügt, in deren Struktur metallische Silber- und KupferIonen eingelagert sind. In der Fig. 2 ist eine Struktur dieser Art bei grosser Vergrösserung unter dem Mikroskop dargestellt.

Solche Zeolithe sind vollständig ungiftig, in solchem Mass, dass die Food and Drug Administration der Vereinigten Staaten die Verwendung als Lebensmittelzusätze gestattet hat.

Die antibakterielle Wirkung beruht auf der Erzeugung von aktivem Sauerstoff durch die metallischen Ionen.

Anzumerken ist, dass die Wirkung des aktiven Sauerstoffs auf die Bakterien keine Restsubstanzen hinterlässt.

Die metallischen Ionen treten langsam aus, jedoch in genügendem Mass, wie die später zu beschreibenden Versuche bestätigen, so dass an den Stellen, wo das Reinigungstuch verwendet wurde, ein wirksames antibakterielles Umfeld entsteht.

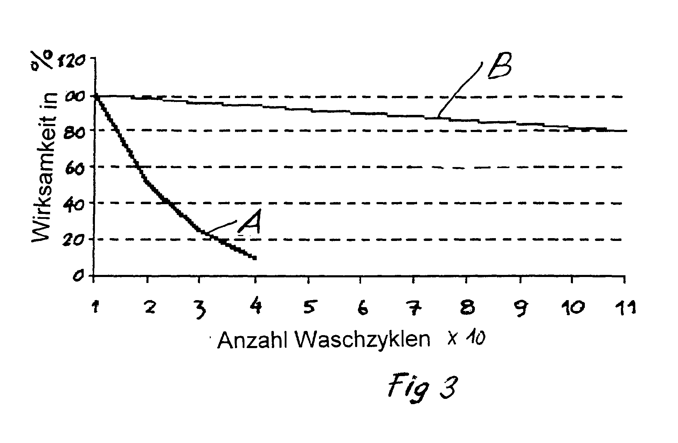

Da die metallischen Ionen, wie dies in der Fig. 2 dargestellt ist, im Innern des Filaments "eingebaut" sind, werden sie unmerklich langsam auch während der Waschphasen freigesetzt; in solcher Weise, dass die antibakterielle Wirkung selbst nach vielfach wiederholten Waschprozessen erhalten bleibt, wie dies in der Fig. 3 dargestellt ist.

In der Fig. 3 ist der Einfluss der Anzahl Waschprozesse auf die prozentuale Wirksamkeit des Reinigungstuchs dargestellt. Dabei ist die auf der Abszisse angegebene Anzahl Waschzyklen mit einem Faktor 10 zu multiplizieren, und auf der Ordinate ist die Wirksamkeit in Prozenten angegeben ist. Die Kurve A stellt den Verlauf der Wirksamkeit über der Anzahl Waschzyklen eines konventionellen Reinigungstuches ohne Zeolithe dar, während die sehr viel flacher abfallende Kurve B den Verlauf für ein erfindungsgemässes Reinigungstuch zeigt.

Ausser der Überwindung der dargelegten Beschränkungen können mit dem neuen, erfindungsgemässen Reinigungstuch die folgenden weiteren Vorteile erreicht werden:
- Stabile und langanhaltende Funktionen;
- Keinerlei Giftigkeit für den Benutzer;
- Sicherheit bei der Verwendung und der Lagerung der Produkte;
- Verminderung der Umweltbelastung dank der dem Produkt innewohnenden Langlebigkeit, zusammen mit der Nicht-Anwendung chemischer Zusätze, im Gegensatz zu den antibakteriellen Reinigungs- und Behandlungssystemen mit normalen Tüchern.

### Antibakterielle Wirkung des erfindungsgemässen Reinigungstuches

Die antimikrobiellen Wirkungen der erfindungsgemässen Reinigungstücher kann wie folgt zusammengefasst werden:
- Verminderte Vermehrung der Bakterien im Innern des Reinigungstuchs:
- Verhindern der Verunreinigung der Reinigungstücher nach der Wäsche.

Die antimikrobielle Wirkung bringt eine interessante Neuerung für die Vorschriften für das Waschen und das Lagern der Produkte vor dem Gebrauch.

Verschiedene Gewebe wurden Versuchen unterworfen, damit bei gleicher anfänglicher bakterieller Verschmutzung, gleichem Feuchtegehalt und gleicher Umgebungstemperatur die Vermehrung der Bakterien verglichen werden konnte. Die Gewebe waren: Baumwolle, herkömmliche Mikrofasern und antibakterielle Mikrofaser, hier mit "VIP Pro Tex" bezeichnet.

Die Versuchsresultate sind in den folgenden Tabellen zusammengefasst.

| **Mit Klebsiella Pneumoniae ausgeführte Versuche** | | | |
|---|---|---|---|
| | Anfangs-Verschmutzung zur Zeit "0" Anzahl der Mikroorganismen | Verschmutzung nach "18 Stunden" Anzahl der Mikroorganismen | Verschmutzung in Prozent der Anfangs-Verschmutzung |
| Baumwolle | 130'000 | 5'900'000 | +4'438% |
| Standard Mikrofaser | 130'000 | 4'500'000 | +3'361% |
| VIP Pro Tex | 130'000 | <10 | -99.99% |

| **Mit Staphylococcus Aureus ausgeführte Versuche** | | | |
|---|---|---|---|
| | Anfangs-Verschmutzung zur Zeit "0" Anzahl der Mikroorganismen | Verschmutzung nach "18 Stunden" Anzahl der Mikroorganismen | Verschmutzung in Prozent der Anfangs-Verschmutzung |
| Baumwolle | 140'000 | 6'700'000 | +4'685% |
| Standard Mikrofaser | 140'000 | 5'700'000 | +3'971% |
| VIP Pro Tex | 140'000 | <10 | -99.99% |

Alle ausgeführten Versuche erlauben also die Feststellung einer ganz wesentlichen Verminderung der bakteriellen Verschmutzung, die unter Anwendung der neuen selbstreinigenden Reinigungstücher VIP Pro Tex gemäss der vorliegenden Erfindung.

## Patentansprüche

1. Reinigungstuch mit selbstreinigender Wirkung,
**dadurch gekennzeichnet, dass**
dieses antibakteriell wirkende keramische Fasern enthält, die aus lamellaren synthetischen Mikrofasern besteht, in die während des Herstellungsprozesses Zeolithe eingebracht worden sind, die Ionen von starker antibakterieller Wirksamkeit enthalten.

2. Reinigungstuch gemäss dem Anspruch 1,
**dadurch gekennzeichnet, dass**
dieses aus einer Kombination von antibakteriell wirkenden keramischen Fasern mit lamellaren synthetischen Mikrofasern besteht.

3. Reinigungstuch gemäss dem Anspruch 1,
**dadurch gekennzeichnet, dass**
die Ionen metallische Silberionen sind.

4. Reinigungstuch gemäss dem Anspruch 1,
**dadurch gekennzeichnet, dass**
die Ionen metallische Kupferionen sind.

5. Anwendung des Reinigungstuches mit selbstreinigender Wirkung gemäss dem Anspruch 1,
**dadurch gekennzeichnet, dass**
dieses zum Reinigen von Glasscheiben, Spiegeln und Stahlflächen unter blosser Verwendung von Wasser verwendet wird.

6. Anwendung des Reinigungstuches mit selbstreinigender Wirkung gemäss dem Anspruch 1,
**dadurch gekennzeichnet, dass**
dieses zum Reinigen von Fussböden und ganz allgemein von horizontalen Oberflächen unter blosser Verwendung von Wasser verwendet wird.

7. Anwendung des Reinigungstuchs gemäss einem der Ansprüche 5 oder 6,
**dadurch gekennzeichnet, dass**
das Reinigungstuch nach Gebrauch mit Wasser gewaschen und bei 92°C getrocknet wird.

8. Anwendung des Reinigungstuchs mit selbstreinigender Wirkung gemäss einem der vorhergehenden Ansprüche 5 bis 7,
**dadurch gekennzeichnet, dass**
wenn das Reinigungstuch in trockenem Zustand verwendet wird, dieses im Stande ist, den Staub anzuziehen und festzuhalten, dank seiner elektrostatischen Anziehungskraft.

9. Anwendung des Reinigungstuchs mit selbstreinigender Wirkung gemäss einem der Ansprüche 5 bis 8,
**dadurch gekennzeichnet, dass**
das Reinigungstuch auch im Kontakt mit Lebensmittel-Substanzen verwendet wird.
